(19) Europäisches Patentamt / European Patent Office / Office européen des brevets

(11) **EP 3 565 293 B1**

(12) **EUROPEAN PATENT SPECIFICATION**

(45) Date of publication and mention
of the grant of the patent:
**17.02.2021 Bulletin 2021/07**

(51) Int Cl.:
***H04W 16/18*** (2009.01)

(21) Application number: **19170571.4**

(22) Date of filing: **23.04.2019**

(54) **A RADIOELECTRIC AND ARCHITECTURAL DESIGN METHOD FOR A BASE TRANSCEIVER STATION**

RADIOELEKTRISCHES UND BAULICHES ENTWURFSVERFAHREN FÜR EINE SENDER-EMPFÄNGERBASISSTATION

PROCÉDÉ DE CONCEPTION RADIOÉLECTRIQUE ET ARCHITECTURAL POUR UNE STATION DE BASE ÉMETTRICE/RECEPTRICE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.05.2018 IT 201800005019**

(43) Date of publication of application:
**06.11.2019 Bulletin 2019/45**

(73) Proprietors:
• **Vodafone Italia S.p.A.**
  **10015 Ivrea (TO) (IT)**
• **Vodafone IP Licensing Limited**
  **Newbury, Berkshire RG14 2FN (GB)**

(72) Inventors:
• **Mollica, Francesco**
  **10015 Ivrea TO (IT)**
• **D'Amato, Giacomo**
  **10015 Ivrea TO (IT)**
• **Piccolo, Maria Agata**
  **10015 Ivrea TO (IT)**

(74) Representative: **Perani & Partners S.p.A.**
**Piazza Armando Diaz, 7**
**20123 Milano (IT)**

(56) References cited:
**US-A1- 2010 305 931    US-A1- 2013 281 100**

• **KOMALA MIRA ET AL: "LTE networks BTS location optimation with double step grey wolf optimizer", 2017 11TH INTERNATIONAL CONFERENCE ON TELECOMMUNICATION SYSTEMS SERVICES AND APPLICATIONS (TSSA), IEEE, 26 October 2017 (2017-10-26), pages 1-6, XP033308536, DOI: 10.1109/TSSA.2017.8272899**

## Description

*FIELD OF APPLICATION*

The present invention relates to a radioelectric and architectural design method for a base transceiver station.

In particular, the method according to the present invention implements a set of steps that enable to define the optimal solution for the radioelectric and architectural design of new base transceiver stations or to update or transfer existing base transceiver stations where a new technology is to be installed and activated (e.g., LTE800 system in a base transceiver station with LTE1800 system already active) to provide a cell phone service in a given area.

*Description of the prior art*

It is known in the telecommunication field, and particularly in the cellular network sector, a method for designing and implementing a base transceiver station, BTS. A base transceiver station is a system for receiving and transmitting a radio signal which is provided with a transceiver antenna to serve users' mobile terminals. Thereby, the base transceiver system provides mobile network coverage in a determined geographical area, also called radio cell. Therefore, the base transceiver station represents the basic infrastructure of cellular communication used in radio connections of cellular mobile networks.

Base transceiver stations are widespread over the territory according to the population density and, therefore, they are mainly concentrated in the highly populated urban areas. According to the number of served users, base transceiver stations are spaced apart between them for a few hundred metres in big cities and up until several kilometres in low populated rural areas. In other words, each base transceiver system is able to serve a limited portion of territory, called cell, whose dimensions depend on the user density in that area, on the height of installations, on the power employed and on the type of antenna used.

A base transceiver station of a determined mobile phone provider is composed of one or more systems of different technologies, such as for example GSM, DCS, and/or UMTS type, which have determined transmitting and receiving frequency ranges. These systems with different technologies, also called services, are in turn composed of one, two and up to three transmitting antennas for urban areas, called cells, differently space-oriented to ensure the service coverage in the surrounding area.

Radio design, once assigned the technologies and frequencies to be used for the base transceiver system, consists in defining the radioelectric configuration, i.e. choosing five parameters featuring the radiation system: type of antenna, its installation height (or antenna base), direction of maximum irradiation (or azimuth), tilt with respect to the horizontal plane (or mechanical and/or electrical tilt), power to the antenna connector (or to the top of the cabinet, considering the abatement from the cabinet top to the antenna connector). The architectural design consists, for new plants, in defining the preliminary architectural design of the structure supporting the radiation system and apparatuses, both for the base band and for the radiofrequency. In case of interventions regarding plants with already existing structure, the design consists in verifying that the residual space is sufficient to enhance the existing plant, both regarding the physical and static space.

Document US 2013/281100 A1 discloses a method which contemplates the coverage area of a radiocommunication network comprising more network cells spread over a geographical area. The method contemplates to calculate the network coverage by means of a simulation with a software which processes electrical and environmental parameters.

*Problem of the prior art*

In the known art, the radio configuration resulting from the operation of maximizing radioelectric coverage, of minimizing interference and verifying/fulfilling the conditions imposed by the current health legislation, is submitted to the architectural design including the static verification of the structure. This latter step can require modifying one or more radioelectric parameters, initiating an iterative process that requires to reconsider the designing step until a general optimal solution is achieved. The known processing systems use algorithms configured to sequentially modify all the parameters of the radio design, testing and comparing all the possible combinations to select the optimal one. However, such a process requires a long time, depending on the granularity and on the degree of freedom based on which the radioelectric parameters can change.

In fact, it can occur that a radioelectric configuration improving coverage and interference conditions, does not comply with obligations imposed by the current health legislation regarding the constraints of the electromagnetic field. Therefore, it may be necessary to vary the tilt or the power to the antenna connector, with respect to one first optimal configuration as for coverage and interference conditions. This requires implementing new simulations which can change radio parameters until a radio configuration complying with coverage, interference, as well as with the electromagnetic field legislation is achieved. The further step of verifying the staticity of the structure can involve a further modification of the radioelectric parameters, such as for example the lowering of an antenna, the impossibility of reaching other antennas, or the dislocation of power amplifiers at different heights, with a resulting variation of the coverage and interference. Thus, the design process may require a long time, with a high risk of selecting a sub-optimal solution. In fact, design is the result of tests and simulations thus performed which can lead to different results according to the skills and experience of the designer, without respecting objectivity criteria, in addition to a longer time needed for the design, as all simulations on coverage and electromagnetic impact are performed in sequence.

*SUMMARY OF THE INVENTION*

The object of the present invention is to realize a radioelectric and architectural design method for a base transceiver station capable of overcoming the drawbacks of the prior art.

The mentioned technical task and the specified objects are substantially achieved by a radioelectric and architectural design method of a base transceiver station comprising the technical characteristics set forth in or more of the enclosed claims.

*Advantages of the invention*

Thanks to one embodiment, it is possible to obtain a method that considers the signal coverage and interference level due to the pre-existing structures, maximizing the coverage of the population and territory surface, and minimizing the radio interference submitted and caused by the new plant with respect to the base transceiver systems already existing on the territory.

Thanks to one embodiment, the method of the present invention allows to: build and insert on the cartography and the surrounding surveys volumes at 6V/m and 20V/m, process the technical card of the base transceiver system to be realized, and draw a list of materials to be purchased to carry out the designed base transceiver system.

Thanks to one embodiment, the method of the present invention allows to perform a structural verification of the infrastructure used.

Thanks to one embodiment, the method of the present invention allows to verify and fulfil the conditions imposed by the health legislation on the electromagnetic field constraints.

*BRIEF DESCRIPTION OF THE DRA WINGS*

The characteristics and the advantages of the present invention will be apparent from the hereinafter detailed description of one possible practical embodiment, shown for exemplary and non-limiting purposes in the set of drawings, wherein:

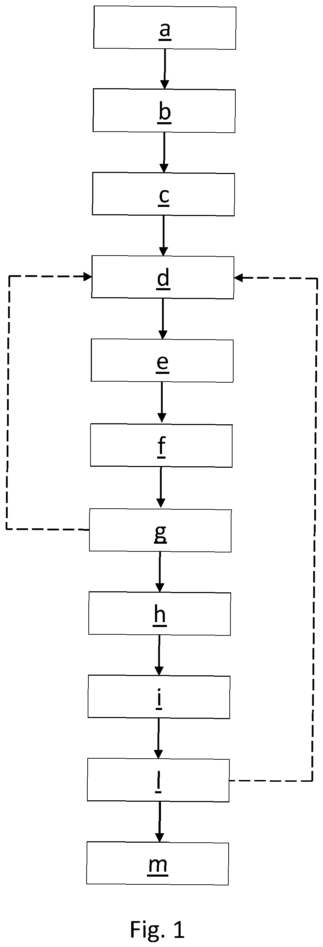

- Figure 1 schematically shows a flow diagram of the steps of the method of the present invention.

*DETAILED DESCRIPTION*

Even where not clearly stated, single characteristics described referring to specific embodiments shall be considered optional and/or interchangeable with other characteristics, described referring to other embodiments.

The invention is only defined by the appended claims.

The present invention relates to a radioelectric and architectural design method for a base transceiver station. The method comprises the hereinafter reported steps, preferably performed in the order illustrated in Figure 1.

The method comprises step a) which contemplates to provide a receiving and transmitting system of a radio signal. The transmitting/receiving system is provided with at least a transceiver antenna configured to put in signal communication a plurality of mobile phone terminals, such as for example cell phones, smartphones and tablets, in one predefined geographical area. The transceiver antenna is configured to receive and transmit a radio signal in a predefined frequency interval, i.e. in a determined frequency range. In other words, step a) contemplates to identify a base transceiver station to be designed and realized ex novo, or in alternative, to identify a pre-existing base transceiver station to be modified, where to design, install and activate a new technology (for example, LTE800 system in a pre-existing base transceiver station with LTE1800 system already active) to provide a cell phone service in a given area. The base transceiver station is provided with at least a transceiver antenna, electronic apparatuses, wires and a structure to support antennas (for example, pole, trellis or rod) at a given height from the ground, with a given tilt and with a given orientation. The existing base transceiver station can provide in the covered territory more services according to the technologies (GSM, IMTS or LTE) and the various frequency bands used (for example, 800, 900, 1400, 1800, 2100 or 2600 MHz).

The method comprises the step b) of supplying data related to the predefined geographical area and data related to the predefined frequency range (for example, LTE800). In other words, the method contemplates to select a geographical area where the transceiver system intended to serve the mobile phone terminals operating in that area will be installed or renewed. For example, in step b) a set of data related to the surface dimension of the geographical area, the density and distribution of users, data related to the territory conformation and the pre-existing transceiver plants in that geographical area are provided. Furthermore, step b) contemplates to supply data related to the predefined frequency range through which the transceiver antenna will have to operate. This means that step b) allows to define the design specifications, among which data related to the predefined geographical area (or population cluster) to be covered, the technology and frequencies to be used.

The method comprises the step c) of supplying a processing unit and a predefined algorithm residing therein. The predefined algorithm is configured to process at least data related to the predefined geographical area and data related to the predefined frequency range, such as to define a radio configuration maximising coverage and minimizing signal interference in the selected predefined geographical area in step b). This means that the algorithm is configured to determine radioelectric parameters and the coverage target to be reached, in terms of minimum signal level and signal/noise ratio to guarantee.

The method also comprises step d) which contemplates to process through the predefined algorithm residing in the processing unit data related to the predefined geographical area and data related to the predefined frequency range for calculating a plurality of radioelectric configuration parameters associated to the transmitting/receiving system. The plurality of radioelectric configuration parameters comprises: at least a radioelectric parameter relative to the type of transceiver antenna; at least a radioelectric parameter relative to the installation height of the transceiver antenna; at least a radioelectric parameter relative to the direction of maximum irradiation of the transceiver antenna; at least one radioelectric parameter related to the tilt of the transceiver antenna with respect to the horizontal plane; and at least a radioelectric parameter related to the power to the connector of the transceiver antenna (or at the cabinet top). In other words. Step d) contemplates to use the predefined algorithm to calculate the aforesaid functioning and installation parameters of the transceiver antenna. The algorithm enables to optimize parameter selection, such as to define a radio configuration which maximizes coverage and minimizes the signal interference in the predefined geographical area selected in step b). Step d) implements a radio network planning module (Radio Network Planning) that initiates the base transceiver system configuration and starts a sequence of parallel simulations which, varying the radioelectric parameters (i.e. type of antenna, quota of the antenna, orientation/azimuth, mechanical/electrical tilt, and power to the antenna connector), identifies the radio configuration that maximizes coverage and minimizes interference. Preferably, in step d) radioelectric parameters that can be modified by the algorithm, with relative variability range and level, are defined. Advantageously, step d) allows to calculate the best radioelectric coverage configuration (types of antennas, heights of antennas, orientation and tilt of antennas and power to connectors), as a compromise between the signal level to guarantee within the area according to the covered population or population to be covered and the maximum acceptable interference generated by the network itself due to reuse of frequencies (i.e., best signal/noise ratio). This optimization is performed based on the design objectives of the base transceiver station defined in step b).

The method further comprises the step e) of processing the plurality of radioelectric configuration parameters by means of the processing unit to generate data related to 6V/m and 20 V/m lobes generated by the transceiver system. Preferably, the processing unit is provided with a software residing therein that enables to build a three-dimension model of 3V/m and 20 V/m lobes generated by the transceiver antenna of the transceiver system. In other words, step e) allows to determine sensitive points, in terms of electrical field and general electrical field assessment generated by the radioelectric configuration identified in step d) in terms of lobes.

The method comprises step f) which contemplates to process data related to lobes at 6V/m and 20 V/m and data related to the predetermined geographical area for generating intersection data if an intersection of the lobes is detected with clutter and/or with the environment surrounding the transmitting/receiving system. In other words, step f) calculates the intersection between data related to lobes at 6V/m and 20 V/m and areas where such electrical field constraints must not be exceeded in compliance with legislation (Law n. 22, February 2001 "Legge quadro sulla protezione dalle esposizioni a campi elettrici, magnetici ed elettromagnetici", n. 36 and DPCM July 8th 2003 "Fissazione dei limiti di esposizione, dei valori di attenzione e degli obiettivi di qualita per la protezione della popolazione dalle esposizioni a campi elettrici, magnetici ed elettromagnetici generati a frequenze comprese tra 100 kHz e 300 GHz").

The method comprises step g) which contemplates to pass to the following step of the method or, if step f) generates intersection data, contemplates by contrast to repeat the aforesaid steps d) to g). Step d), thus repeated, also comprises the sub-step of processing through the pre-determined algorithm data related to the predetermined geographical area, data related to the predetermined frequency range and intersection data for calculating again the plurality of radioelectric configuration parameters associated to the transmitting/receiving system. In other words, step g) contemplates to modify the radioelectric configuration if lobes at 6 V/m and 20 V/m intercept building areas or surfaces where such constraints must not be exceeded.

The method comprises the step h) of providing modelling data of roof top-type and raw land-type structures. Modelling data of roof top-type and raw land-type structures comprise structural data such as, for example, type of structure (pole, trellis or rod), whether roof top or raw land, seismic area, type of steel used, class of bolts, maximum tilt allowed, thickness of ice, constraints, loads introduced by cables and additional other loads (such as amplifiers mounted at a height). According to a preferred embodiment, in which a new base transceiver station is to be realized, step h) comprises the sub-step of providing modelling data of the roof top-type and raw land-type structures relative to constraints for realizing a new base transceiver station structure. According to an embodiment alternative to the previous one, in which an already existing base transceiver station is to be renewed, step h) comprises the sub-step of providing modelling data of the roof top-type and raw land-type structures related to the pre-existing structure in the predefined geographical area. Preferably, modelling data of the roof top-type and raw land-type structures are determined on the basis of the pre-existing poles and trellis in the predetermined geographical area.

The method comprises the step i) of processing the plurality of radioelectric configuration parameters and data of modelling roof top-type and raw land-type structures to generate project data relative to the structure of the base transceiver station to be realized (in case it is a new implementation) or to be updated (if pre-existing). In other words, step i) produces a model of the structure that will house the design system. Modelling is performed on the basis of modelling data of the roof top-type and raw land-type structures provided in step h).

The method further comprises the step 1) of processing project data to verify the structural stability of the base transceiver station structure, and terminating the method if the base transceiver station structure is structurally stable. Alternatively, step 1) contemplates to repeat steps d) to e) if the structure of the base transceiver station is structurally unstable. Specifically, the step d) thus repeated comprises the sub-step of modifying one or more radioelectric parameters of the plurality of radioelectric configuration parameters associated to the transceiver system such that the model of the base transceiver station structure is structurally stable.

According to a preferred solution, when the step g) contemplates to repeat steps d) to g), then step d) thus repeated also comprises the sub-step of modifying at least one parameter of the radioelectric configuration parameters according to intersection data.

According to a preferred solution, step 1) contemplates to repeat also step f) if the structure of the base transceiver station is structurally unstable.

According to a preferred embodiment, the method comprises the step m) of generating and viewing configuration data of the base transceiver station. Configuration data comprise at least the plurality of radioelectric configuration parameters. Preferably, configuration data of the base transceiver station comprise data related to 6V/m and 20 V/m lobes. Always preferably, the base transceiver station configuration data comprise intersection data. Still more preferably, the base transceiver station configuration data comprise project data.

According to a preferred embodiment of the invention, the transceiver system is implemented with GSM, DCS, UMTS or LTE technologies, or with any one of the preceding combinations.

According to a preferred embodiment, modelling data of the roof top-type and raw land-type structures are relative to the static space determined on the basis of the poles and trellis pre-existing in the predefined geographical area selected in step b). Preferably, the processing unit is configured for modelling the structures, either of the roof top-type or raw land-type (e.g., poles or trellis), such as to perform a structural verification thereof, returning back to the user information that enable him to decide if the radioelectric modifications can be technically implemented or if a static reinforcement of the structure is necessary.

In the following, one embodiment of the method of the present invention is described wherein the predefined algorithm is an algorithm of the Artificial Bee Colony type, i.e. an operating search algorithm based on the mechanisms that lead bees to search for food and to discover new food sources.

EXAMPLE

In step d), where the aforesaid Artificial Bee Colony logarithm is performed, a function, called featness function, is optimized:

$$F = 1 - (a*PL_{RXSL} + b*P_{SINR})/P_{TOT}$$

Where:

- $P_{TOT}$ is the population or the total surface in the simulation area;
- $P_{LRXSL}$ is the population or the surface that, within the simulation area, fulfils the RX Signal Level $\geq$ RXSLTARGET condition;
- $P_{SINR}$ is the population or the surface that, within the simulation area, fulfils the SINR $\geq$ SINRTARGET interference condition;
- a and b are coefficients with value $0 \leq a, b \leq 1$ and $(a + b) = 1$;
- F with value between 0 and 1;
- F = 0 means that all the population or surface in the simulation area fulfils both conditions on the signal level and on the signal/noise ratio.

In step e) the radio configuration corresponding to the optimal featness function is supplied to the processing system which builds 6V/m and 20 V/m lobes originating from the new radiation system. The processing unit verifies the possible intersection with clutter and surrounding environment represented in a three-dimension mode.

In the step f) the existence of possible intersections and the extent thereof automatically initiates changes in radioelectric parameters, according to priorities, prescribed by the radio guide lines and by possibly sharing the structure and the radiation system with other operators. In step g), the new configuration requires to repeat again the steps of the method starting from step d) to re-optimize the radio parameters such as to guarantee the best coverage, the best signal/noise ratio and avoid intersections of 6V/m and 30V/m lobes with sensitive buildings and areas (i.e. where such limits must not be overcome), in addition to overcoming constraints and quality objectives of the overall electromagnetic field given by the existing electromagnetic background and the contribution input by the new source (or base transceiver system).

In step 1), if the new radio configuration is within the static space of the existing structure, the method automatically provides to repeat the steps from the step d) which modifies one or more radio parameters until it sequentially reaches all the subsequent steps, and hence a new project cycle starts.

In step i), according to the new radioelectric configuration in step d) and according to the modelling of the roof top-type and raw land-type structures (poles and trellis) obtained in step h), project data relative to the project of the base transceiver station structure are produced: for example, project data generated at step i) are produced realizing a model of the base transceiver station structure by means of processing finished elements.

In step 1) it is assessed whether the structure designed in step i) is structurally stable or not. The structural stability of the base transceiver station structure is assessed either if a new base transceiver station is to be realized, and if a pre-existing base transceiver station already provided with a supporting structure is being updated. In the latter case it will be necessary to evaluate if the pre-existing structure is able or not to support the new antennas to be installed based on the radioelectric parameters obtained at step d), possibly reinforcing the existing structure. In case the structure thus designed according to the radioelectric parameters defined at step d) is not structurally stable, step 1) contemplates to automatically modify one or more radioelectric parameters such as to create a design compromise, i.e. a base transceiver station with a structurally stable structure and with a radioelectric configuration which in any case guarantees the required coverage.

In step m), the system outputs a final configuration document, an Environmental Impact Assessment and optionally the application with the Preliminary Plan. In addition, at step m) it is possible to process the technical card of the base transceiver system to be implemented or updated, and for example, draw the list of materials to be purchased to realize the base transceiver system designed.

Advantageously, the method according to the present invention allows to define the radio configuration that implements a new base transceiver system of assigned technology and frequency.

Advantageously, the method according to the present invention provides a design solution for an optimal and rigorous base transceiver system, not limited by the subjectivity of the design engineer.

The method according to the present invention implements a smart, rapid and easy solution as it allows to operate using a single digital interface. The user can advantageously employ a single tool (or processing unit) which implements the method therein rapidly performing all the aforementioned back-actions, making them completely transparent for the user. Operations thereof are performed rigorously through mathematic algorithms. The user can optionally interact with the tool and enter into the different steps of the method for inserting constraints and particular conditions, or for importing a focused geographical area, duly drawn.

Preferably, the processing unit takes information on the network radio configuration and existing elements from an associated database or through an internet connection with an external server.

Advantageously, by implementing the method of the present invention, it is possible to consider the level of coverage and interference that can derive from information available regarding pre-existing sites and structures. The radio configuration is defined such as to maximize the coverage of the population or surface of the territory, and such as to minimize the interference subjected and caused by the new plant with respect to the base transceiver systems already existing on the territory, having similar functioning technology and frequency. The values that can be assumed by the aforementioned radioelectric parameters, i.e. type of antenna, antenna base height, orientation, tilt, and power to the antenna connector, depend on the radio guidelines, on the type of surrounding clutter, on already existing sites, on possibly sharing the structure and the radiation system with other mobile phone providers.

Advantageously, the design method enables to verify the technical feasibility of the intervention in terms of available physical and static spaces.

Advantageously, with a preliminary reliability assessment, the electromagnetic impact assessment of the base transceiver station is carried out to verify the compliance with the health legislation on electromagnetic fields. In this step softwares residing in the processing unit are used enabling to: estimate electromagnetic fields; construct and insert, on the cartography and the surrounding surveys, volumes at 6V/m and 20V/m; process the technical card of the base transceiver system to be implemented; and draw the list of materials (baseband or radiofrequency radio cards, antennas, and materials) to be purchased to realize the designed configuration for the base transceiver system.

Advantageously, the radio configuration resulting from the operation of maximizing the radioelectric coverage, minimizing the interference and verifying/fulfilling the conditions imposed by the current health legislation, is subsequently submitted to the steps of design method, including the static verification of the structure and possibly requiring to modify one or more radioelectric parameters, initiating a reiterative process going back to step d) at the basis of the radioelectric design, until a sub-optimal solution is determined for each single step, but optimal as a whole. In other words, this change in parameters requires new iterations, to re-optimize the radio configuration such as to reach a configuration that will be sub-optimal for single targets of radio coverage, interference, legislation and structural verification, but that will be the best configuration simultaneously fulfilling all the conditions.

Finally, the method according to the present invention can be implemented by means of using a digital processing unit, that automates the above described mechanisms and verifications/iterations, identifying, in a rigorous and automatic way, the radioelectric configuration which: i) maximizes the radio coverage of the population or territory, ii) minimizes the radio interference produced on the pre-existing systems of equal technology and frequency, iii) fulfils the quality constraints and targets for electromagnetic fields, and iv) verifies if the structure has residual static space.

Obviously, a person skilled in the art, in order to fulfil contingent and specific needs, shall make several changes to the aforementioned variants, all within the scope of protection as defined by the following claims.

## Claims

1. A radioelectric and architectural design method for a base transceiver station, comprising the following steps in the following order:

    a) providing a system for transceiving a radio signal provided with at least a transceiver antenna configured to put in signal communication a plurality of mobile phone terminals in a predetermined geographical area, said transceiver antenna being configured for receiving and transmitting a radio signal in a predetermined frequency range;
    b) providing data related to said predetermined geographical area and data related to said predetermined frequency range;
    c) providing a processing unit and a predetermined algorithm residing therein, said predetermined algorithm being configured for processing at least said data related to said predetermined geographical area and said data related to said predetermined frequency range so as to define a radio configuration maximizing coverage and minimizing signal interference in said predetermined geographical area;
    d) processing through said predetermined algorithm in said processing unit said data related to said predetermined geographical area and said data related to said predetermined frequency range for calculating a plurality of radioelectric configuration parameters associated with said transreceiving system, said plurality of radioelectric configuration parameters comprising at least one radioelectric parameter related to the type of transceiver antenna and at least a radioelectric parameter related to installation height of said transceiver antenna and at least a radioelectric parameter related to the direction of maximun irradiation of said transceiver antenna and at least one radioelectric parameter related to the tilt of said tranceiver antenna with respect to the horizontal plane and at least a radioelectric parameter related to power at the cabinet top or at the connector of said transceiver antenna;
    e) processing said plurality of radioelectric configuration parameters through said processing unit for generating data related to lobes at 6V/m e 20 V/m generated by the transceiver antenna of said transreceiving system;
    f) processing said data related to said lobes at 6V/m e 20 V/m generated by the transceiver antenna of said transreceiving system and said data related to said predetermined geographical area for generating intersection data if an intersection of said lobes is detected with clutter and/or with the surrounding environment of said transreceiving system;
    g) proceeding to the following step of the method or, if said step f) generates said intersection data, repeating said steps d) to g) wherein said step d) comprises the substep of processing through said predetermined algorithm said data related to said predetermined geographical area and said data related to said predetermined frequency range and said intersection data for calculating again said plurality of radioelectric configuraton parameters associated to said transreceiving system;

**characterized in that it comprises the steps of:**

    h) providing modelling data of the structures of roof top type and of raw land type;
    i) processing said plurality of electric configuration parameters and said modelling data of the structures of roof top type and raw land type for generating project data related to the structure of the base transceiver station;
    1) processing said project data for assessing the structural stability of said structure of the base transceiver station, and finalizing the method if said structure of the base transceiver station is structurally stable or repeating said steps from d) to e) if said structure of the base transceiver station is structurally unstable, wherein said step d) comprises the sub-step of modifying one or more radioelectric parameters of said plurality of radioelectric configuration parameters associated to said transreceiving system in such a way that said model of structure of base transceiver station is structurally stable;

wherein

    - when said step g) provides to repeat said steps d) to g), said step d) comprises the sub-step of modifying at least one radioelectric parameter of said plurality of radioelectric configuration parameters on the basis of said intersection data.

**2.** The method according to claim 1, wherein

- said step 1) provides to repeat also said step f) when said structure of the base transceiver station is structurally unstable.

**3.** The method according to any one of the preceding claims, wherein

- said step h) comprises the sub-step of providing modelling data of the structures of roof top type and raw land type related to a pre-existing structure in said predetermined geographical area.

**4.** The method according to claim 3, wherein said modelling data of the structures of the roof top type and of the raw land type are determined on the basis of pre-existing posts and trellis in said predetermined geographical area.

**5.** The method according to any one of the preceding claims, comprising the following step:
m) generating and viewing configuration data of said base transceiver station comprising at least a radioelectric parameter of said plurality of radioelectric configuration parameters.

**6.** The method according to claim 5, wherein said configuration data of said base transceiver station comprise said data related to lobes at 6V/m e 20 V/m generated by the transceiver antenna of said transreceiving system and/or said intersection data.

**7.** The method according to claim 5 or 6, wherein said configuration data of said base transceiver station comprise said project data related to the structure of the base transceiver station.

**8.** The method according to any one of the preceding claims, wherein said system for transceiving a radio signal is performed with GSM and/or DCS and/or UMTS and/or LTE technology.

**9.** The method according to any one of the preceding claims, wherein said predetermined algorithm is an algorithm of the Artificial Bee Colony type.

**Patentansprüche**

**1.** Funkelektrisches und architektonisches Konstruktionsverfahren für eine Sende-/Empfangsbasisstation, das die folgenden Schritte in der folgenden Reihenfolge umfasst:

a) Bereitstellen eines Systems zum Senden/Empfangen eines Funksignals, das mit mindestens einer Sendeempfangsantenne ausgerüstet ist, die dazu ausgelegt ist, eine Vielzahl von Mobiltelefonendgeräten in einem vorbestimmten geografischen Gebiet in Signalkommunikation zu bringen, wobei die Sendeempfangsantenne zum Empfangen und Übertragen eines Funksignals in einem vorbestimmten Frequenzbereich ausgelegt ist;
b) Bereitstellen von Daten, die das vorbestimmte geografische Gebiet betreffen, und von Daten, die den vorbestimmten Frequenzbereich betreffen;
c) Bereitstellen einer Verarbeitungseinheit und eines vorbestimmten Algorithmus, der sich in derselben befindet, wobei der vorbestimmte Algorithmus zum Verarbeiten von mindestens der Daten, die das vorbestimmte geografische Gebiet betreffen, und der Daten, die den vorbestimmten Frequenzbereich betreffen, um eine Funkauslegung zu definieren, die im vorbestimmten geografischen Gebiet eine Abdeckung maximiert und Signalinterferenzen minimiert;
d) Verarbeiten der Daten, die das vorbestimmte geografische Gebiet betreffen, und der Daten, die den vorbestimmten Frequenzbereich betreffen, durch den vorbestimmten Algorithmus in der Verarbeitungseinheit, um eine Vielzahl von funkelektrischen Auslegungsparametern zu berechnen, die mit dem Sendeempfangssystem verknüpft sind, wobei die Vielzahl von funkelektrischen Auslegungsparametern mindestens einen funkelektrischen Parameter, der den Typ der Sendeempfangsantenne betrifft, und mindestens einen funkelektrischen Parameter, der eine Installationshöhe der Sendeempfangsantenne betrifft, und mindestens einen funkelektrischen Parameter, der die Richtung einer maximalen Abstrahlung der Sendeempfangsantenne betrifft, und mindestens einen funkelektrischen Parameter, der die Neigung der Sendeempfangsantenne mit Bezug auf die horizontale Ebene betrifft, und mindestens einen funkelektrischen Parameter, der die Leistung an der Gehäusespitze oder am Verbinder der Sendeempfangsantenne betrifft, umfassen;
e) Verarbeiten der Vielzahl von funkelektrischen Auslegungsparametern durch die Verarbeitungseinheit zum Erzeugen von Daten, die Keulen bei 6 V/m und 20 V/m, die von der Sendeempfangsantenne des Sendeempfangssystems erzeugt werden, betreffen;
f) Verarbeiten der Daten, die Keulen bei 6 V/m und 20 V/m, die von der Sendeempfangsantenne des Sendeempfangssystems erzeugt werden, betreffen, und der Daten, die das vorbestimmte geografische Gebiet betreffen, um Überschneidungsdaten zu erzeugen, wenn eine Überschneidung der Keulen mit Störecho und/oder mit der umliegenden Umgebung des Sendeempfangssystems detektiert wird;

g) Fortfahren mit dem folgenden Schritt des Verfahrens oder, wenn der Schritt f) die Überschneidungsdaten erzeugt, Wiederholen der Schritte d) bis g), wobei der Schritt d) den Unterschritt des Verarbeitens der Daten, die das vorbestimmte geografische Gebiet betreffen, und der Daten, die den vorbestimmten Frequenzbereich betreffen, und der Überschneidungsdaten durch den vorbestimmten Algorithmus umfasst, um die Vielzahl von funkelektrischen Auslegungsparametern, die mit dem Sendeempfangssystem verknüpft sind, erneut zu berechnen;

**dadurch gekennzeichnet, dass es die folgenden Schritte umfasst:**

h) Bereitstellen von Modellierungsdaten der Strukturen des Dachtyps und des Bodentyps;
i) Verarbeiten der Vielzahl von elektrischen Auslegungsparametern und der Modellierungsdaten der Strukturen des Dachtyps und des Bodentyps zum Erzeugen von Projektdaten, die die Struktur der Sende-/Empfangsbasisstation betreffen;
1) Verarbeiten der Projektdaten zum Beurteilen der Strukturstabilität der Struktur der Sende-/Empfangsbasisstation und Abschließen des Verfahrens, wenn die Struktur der Sende-/Empfangsbasisstation strukturell stabil ist, oder Wiederholen der Schritte von d) bis e), wenn die Struktur der Sende-/Empfangsbasisstation strukturell instabil ist, wobei der Schritt d) den Unterschritt des Modifizierens von einem oder mehreren funkelektrischen Parametern der Vielzahl von funkelektrischen Auslegungsparametern, die mit dem Sendeempfangssystem verknüpft sind, derart, dass das Modell der Struktur der Sende-/Empfangsbasisstation strukturell stabil ist, umfasst;

wobei

- wenn der Schritt g) das Wiederholen der Schritte d) bis g) vorsieht, der Schritt d) den Unterschritt des Modifizierens von mindestens einem funkelektrischen Parameter der Vielzahl von funkelektrischen Auslegungsparametern auf Basis der Überschneidungsdaten umfasst.

2. Verfahren nach Anspruch 1, wobei

- der Schritt 1) das Wiederholen auch des Schritts f) vorsieht, wenn die Struktur der Sende-/Empfangsbasisstation strukturell instabil ist.

3. Verfahren nach einem der vorhergehenden Ansprüche, wobei

- der Schritt h) den Unterschritt des Bereitstellens von Modellierungsdaten der Strukturen des Dachtyps und des Bodentyps, die eine bereits bestehende Struktur in dem vorbestimmten geografischen Gebiet betreffen, umfasst.

4. Verfahren nach Anspruch 3, wobei die Modellierungsdaten der Strukturen des Dachtyps und des Bodentyps auf Basis von bereits bestehenden Pfosten und Gittern in dem vorbestimmten geografischen Gebiet bestimmt werden.

5. Verfahren nach einem der vorhergehenden Ansprüche, das den folgenden Schritt umfasst:
m) Erzeugen und Anzeigen von Auslegungsdaten der Sende-/Empfangsbasisstation, die mindestens einen funkelektrischen Parameter der Vielzahl von funkelektrischen Auslegungsparametern umfassen.

6. Verfahren nach Anspruch 5, wobei die Auslegungsdaten der Sende-/Empfangsbasisstation die Daten, die Keulen bei 6 V/m und 20 V/m, die von der Sendeempfangsantenne des Sendeempfangssystems erzeugt werden, und/oder die Überschneidungsdaten umfassen.

7. Verfahren nach Anspruch 5 oder 6, wobei die Auslegungsdaten der Sende-/Empfangsbasisstation 5 die Projektdaten, die die Struktur der Sende-/Empfangsbasisstation betreffen, umfassen.

8. Verfahren nach einem der vorhergehenden Ansprüche, wobei das System zum Senden/Empfangen eines Funksignals mit GSM- und/oder DCS- und/oder UMTS- und/oder LTE-Technologie durchgeführt wird.

9. Verfahren nach einem der vorhergehenden Ansprüche, wobei der vorbestimmte Algorithmus ein Algorithmus des Typs Artificial Bee Colony ist.

**Revendications**

1. Procédé de conception radioélectrique et architecturale pour une station d'émission-réception de base, comprenant les étapes suivantes dans l'ordre suivant :

a) la fourniture d'un système d'émission-réception d'un signal radio pourvu d'au moins une antenne d'émission-réception configurée pour mettre en communication de signal une pluralité de terminaux de téléphone mobile dans une zone géographique prédéterminée, ladite antenne d'émission-réception étant configurée pour recevoir et émettre un signal radio dans une plage de fréquence prédéterminée ;

b) la fourniture de données liées à ladite zone géographique prédéterminée et de données liées à ladite plage de fréquence prédéterminée ;

c) la fourniture d'une unité de traitement et un algorithme prédéterminé résidant dans celle-ci, ledit algorithme prédéterminé étant configuré pour traiter au moins lesdites données liées à ladite zone géographique prédéterminée et lesdites données liées à ladite plage de fréquence prédéterminée de manière à définir une configuration radio maximisant la couverture et minimisant les interférences de signal dans ladite zone géographique prédéterminée ;

d) le traitement, par l'intermédiaire dudit algorithme prédéterminé dans ladite unité de traitement, desdites données liées à ladite zone géographique prédéterminée et desdites données liées à ladite plage de fréquence prédéterminée pour calculer une pluralité de paramètres de configuration radioélectrique associés audit système d'émission-réception, ladite pluralité de paramètres de configuration radioélectriques comprenant au moins un paramètre radioélectrique lié au type d'antenne d'émission-réception et au moins un paramètre radioélectrique lié à la hauteur d'installation de ladite antenne d'émission-réception et au moins un paramètre radioélectrique lié à la direction d'irradiation maximale de ladite antenne d'émission-réception et au moins un paramètre radioélectrique lié à l'inclinaison de ladite antenne d'émission-réception par rapport au plan horizontal et au moins un paramètre radioélectrique lié à l'alimentation au niveau du sommet de l'armoire ou au niveau du connecteur de ladite antenne d'émission-réception ;

e) le traitement de ladite pluralité de paramètres de configuration radioélectriques par l'intermédiaire de ladite unité de traitement pour générer des données liées aux lobes à 6V/m et 20 V/m générées par l'antenne d'émission-réception dudit système d'émission-réception ;

f) le traitement desdites données liées auxdits lobes à 6V/m et 20 V/m générées par l'antenne d'émission-réception dudit système d'émission-réception et desdites données liées à ladite zone géographique prédéterminée pour générer des données d'intersection si une intersection desdits lobes est détectée avec le l'encombrement et/ou avec l'environnement environnant dudit système d'émission-réception ;

g) le passage à l'étape suivante du procédé ou, si ladite étape f) génère lesdites données d'intersection, la répétition desdites étapes d) à g) où ladite étape d) comprend la sous-étape de traitement par l'intermédiaire dudit algorithme prédéterminé desdites données liées à ladite zone géographique prédéterminée et desdites données liées à ladite plage de fréquence prédéterminée et desdites données d'intersection pour calculer à nouveau ladite pluralité de paramètres de configuration radioélectriques associés audit système d'émission-réception ;

**caractérisé en ce qu'il comprend les étapes de** :

h) fourniture de données de modélisation des structures de type toit et de type terrain vierge ;
i) traitement de ladite pluralité de paramètres de configuration électriques et desdites données de modélisation des structures de type toit et de type terrain vierge pour générer des données de projet liées à la structure de la station d'émission-réception de base ;
1) traitement desdites données de projet pour évaluer la stabilité structurelle de ladite structure de la station d'émission-réception de base, et finalisation du procédé si ladite structure de la station d'émission-réception de base est structurellement stable ou répétition desdites étapes de d) à e) si ladite structure de la station d'émission-réception de base est structurellement instable, où ladite étape d) comprend la sous-étape consistant à modifier un ou plusieurs paramètres radioélectriques de ladite pluralité de paramètres de configuration radioélectriques associés audit système d'émission-réception de manière à ce que ledit modèle de structure de la station d'émission-réception de base est structurellement stable ;

où

- lorsque ladite étape g) prévoit de répéter lesdites étapes d) à g), ladite étape d) comprend la sous-étape consistant à modifier au moins un paramètre radioélectrique de ladite pluralité de paramètres de configuration radioélectriques sur la base desdites données d'intersection.

2. Procédé selon la revendication 1, où

- ladite étape 1) prévoit de répéter également ladite étape f) lorsque ladite structure de la station d'émission-réception de base est structurellement instable.

3. Procédé selon l'une quelconque des revendications précédentes, où

- l'étape h) comprend la sous-étape consistant à fournir des données de modélisation des structures de type toit et de type terrain vierge liées à une structure préexistante dans ladite zone géographique prédéterminée.

4. Procédé selon la revendication 3, où lesdites données de modélisation des structures du type toit et du type terrain vierge sont déterminées sur la base de poteaux et de treillis préexistants dans ladite zone géographique prédéterminée.

5. Procédé selon l'une quelconque des revendications précédentes, comprenant l'étape suivante :
m) générer et visualiser des données de configuration de ladite station d'émission-réception de base comprenant au moins un paramètre radioélectrique de ladite pluralité de paramètres de configuration radioélectriques.

6. Procédé selon la revendication 5, où lesdites données de configuration de ladite station d'émission-réception de base comprennent lesdites données liées à des lobes à 6 V/m et 20 V/m générés par l'antenne d'émission-réception dudit système d'émission-réception et/ou lesdites données d'intersection.

7. Procédé selon la revendication 5 ou 6, où lesdites données de configuration de ladite station d'émission-réception de base 5 comprennent lesdites données de projet liées à la structure de la station d'émission-réception de base.

8. Procédé selon l'une quelconque des revendications précédentes, où ledit système d'émission-réception d'un signal radio est réalisé avec la technologie GSM et/ou DCS et/ou UMTS et/ou LTE.

9. Procédé selon l'une quelconque des revendications précédentes, où ledit algorithme prédéterminé est un algorithme du type colonie d'abeilles artificielles.

Fig. 1

**EP 3 565 293 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013281100 A1